# EUROPÄISCHE PATENTANMELDUNG

(11) **EP 2 260 701 A1**
(43) Veröffentlichungstag der Anmeldung: **15.12.2010**
(21) Anmeldenummer: 09162646.5
(22) Anmeldetag: 12.06.2009
(51) Int. Cl.: A01M 29/00, A01M 29/02, A01M 31/00

(54) **Effektive Tierabwehr**

(71) Anmelder: Kothgasser, Gerhard, 8200 Gleisdorf (AT)
(72) Erfinder: Kothgasser, Gerhard, 8200 Gleisdorf (AT)

(57) **Zusammenfassung**

Die Tierabwehr schreckt Tiere davor ab, in einen geschützten Bereich einzudringen. Die Tiere werden abgeschreckt, indem sie zuerst einen Ton hören und danach mit Wasser angespritzt werden. Das Eindringen in den geschützten Bereich wird durch Bewegungsmelder und oder Lichtschranken detektiert. Die Signale der Bewegungsmelder und Lichtschranken werden in einem Mikroprozessor verarbeitet. Dieser errechnet aufgrund der Betätigungshäufigkeit, ob ein Ton ausgegeben und ob Wasser gespritzt wird, und wie lange der Ton und das Wasserspritzen andauern. Aufgrund unterschiedlicher Häufigkeit, mit welcher Bewegungsmelder und Lichtschranken betätigt werden, soll festgestellt werden, ob die Auslösung durch ein Tier oder z.B. durch Wind erfolgte. D.h. es soll nicht bei jeder Betätigung ein Ton ausgegeben oder Wasser gespritzt werden. Dadurch wird verhindert, dass sich die Tiere daran gewöhnen. Weil nach jedem Ton ein Wasserstrahl folgt hat das für die Tiere einen hohen Abschreckungseffekt. Weiters soll nicht unnötig Wasser verspritzt und Personen mit empfindlichem Gehör nicht überstrapaziert werden.

## Beschreibung

Die Tierabwehr soll Tiere(z.B. Katzen, Hunde, freilaufende Kaninchen, Mader, etc.) von Flächen(z.B. Garten) oder Objekten fernhalten, damit die Tiere diese Flächen und Objekte nicht umgraben, beschmutzen, zerstören oder darauf ihre Fäkalien hinterlassen.

### Technisches Gebiet

Die effektive Tierabwehr ist eine kombinierte akustisch-mechanische Tierabwehr. Die Tiere werden abgeschreckt indem zuerst ein akustisches Signal ertönt und die Tiere danach mit Wasser angespritzt werden. Das Eindringen der Tiere in den geschützten Bereich wird mittels Bewegungsmelder und Lichtschranken detektiert.

### Stand der Technik

Es gibt Geräte(als Tierabwehr bezeichnet) die einen Ton im Ultraschallbereich aussenden um die Tiere dadurch abzuschrecken. Diese Geräte können im Internet und in Elektronik-Fachmärkten gekauft werden. Es gibt Geräte mit integriertem Bewegungsmelder und Geräte die über einen extern anschließbaren Bewegungsmelder aktiviert werden können. Der Ultraschallton bei den herkömmlichen Geräten wird immer dann aktiviert wenn der Bewegungsmelder ausgelöst wurde. Die Auslösung erfolgt nicht ausschließlich durch Tiere sondern z.B. auch durch Sträucher oder sonstige Dinge die durch den Wind bewegt werden. Der 1. Nachteil ist dass die Tiere den ständigen Ton nach relativ kurzer Zeit nicht mehr abschreckend empfinden. Der 2. Nachteil bei durch Windbewegungen ausgelösten Bewegungsmeldern ist, dass Personen mit empfindlichem Gehör ständig den hohen Ton hören.

### Darstellung der Erfindung

Die Tiere werden abgeschreckt indem sie zuerst ein akustisches Signal wahrnehmen und danach mit Wasser angespritzt werden.

Das akustische Signal und der Wasserstrahl werden aktiviert wenn ein Tier den Bewegungsmelder auslöst oder den Lichtschranken unterbricht.

Die Signale der Bewegungsmelder und Lichtschranken die von diesen bei Betätigung ausgeben werden, werden in einem Mikroprozessor weiterverarbeitet. Die Betätigung kann durch ein Tier oder z.B. auch durch Sträucher oder Gräser die durch den Wind bewegt werden erfolgen. Diese ungewollten Betätigungen durch den Wind sollen erfasst, und durch den Mikroprozessor möglichst gut ausgewertet werden, und dadurch verhindern dass kein akustisches Signal und kein Wasserstrahl ausgegeben werden.

Je nach Größe und Form der Fläche bzw. des Objektes können ein oder mehrere Bewegungsmelder und Lichtschranken eingesetzt werden. Es können Bewegungsmelder die nach dem Prinzip von Hochfrequenz(HF) oder von Infrarot(IR) arbeiten eingesetzt werden. Es kann auch nur ein Bewegungsmelder oder eine Lichtschranke eingesetzt werden. Das gleiche trifft auch auf die Anzahl der akustischen Signalgeber und der Wasserspritzer zu. In dieser Patentanmeldung bezieht sich die Darstellung immer auf ein Gerät(z.B. Bewegungsmelder oder Wasserspritzer), jedoch schließt das mit ein, dass damit ein oder mehreren Geräte gemeint sind. Z.B. ein oder mehrere Lichtschranken.

Wenn z.B. der Bewegungsmelder oder die Lichtschranke das 1.mal angesprochen haben, werden das akustische Signal und der Wasserstrahl(=Ausgangssignal) für einige Sekunden(z.B. 10 Sekunden) aktiviert. Wenn nun der Bewegungsmelder oder die Lichtschranke das 2.mal ansprechen, werden das akustische Signal und der Wasserstrahl wieder für einige Sekunden(z.B. 7 Sekunden) aktiviert. Beim 3.mal werden Ton und Wasserstrahl für 5 Sekunden aktiviert usw. Nachdem der Bewegungsmelder oder die Lichtschranke 7-mal hintereinander angesprochen haben(= ein Zyklus), werden für ca. 10-15 Minuten kein Signal und kein Wasserstrahl ausgesendet. Wenn der Bewegungsmelder oder die Lichtschranke nur 5-mal hintereinander ansprechen, d.h. wenn nicht innerhalb von ca. 10 Minuten die 6. Aktivierung erfolgt, wird der Zyklus zurückgesetzt, und die nächste Aktivierung wird wieder als 1. Aktivierung gezählt. Während das akustische Signal oder der Wasserstrahl aktiviert sind wird kein neues Signal vom Bewegungsmelder oder von der Lichtschranke weitergegeben.

Danach kann der Bewegungsmelder wieder 7-mal hintereinander ansprechen, und danach werden für ca. 30 Minuten kein akustisches Signal und kein Wasserstrahl ausgesendet. Nach dem nächsten Zyklus dauert es ca. 1 Stunde, und beim 4. Zyklus dauert es 4 Stunden bis wieder ein Ausgangssignal(=akustisches Signal und ein Wasserstrahl) ausgesendet werden können. Danach beginnt der Zyklus von vorne. Aufgrund der Zwangspausen zwischen den Durchläufen ist gewährleistet, dass der Wind die Ausgangssignale der Tierabwehr möglichst wenig aktiviert.

Wenn die Lichtschranke für mehr als 10 Minuten unterbrochen bleibt oder der Bewegungsmelder mehr als 4 Stunden hindurch aktiviert ist wird ein Alarm signalisiert.

Wenn der Wasserstrahl den Bewegungsmelder oder die Lichtschranke betätigt, so wird dieses Signal durch den Mirkoprozessor ausgeblendet, sodass es dadurch zu keiner weiteren Aktivierung kommt.

Das akustische Signal, wenn es aktiviert wird, sieht wie folgt aus: Zuerst wird ein Tonimpuls von ca. ½ Sekunde ausgesendet, und danach ein Dauerton.

Der Wasserstrahl wird ca. 2-3 Sekunden nachdem das akustische Signal ertönt aktiviert. Der Wasserstrahl wird ca. ½ - 2 Sekunden bevor das akustische Signal verstummt ausgeschaltet.

Fehlauslösungen eines IR-Bewegungsmelders bei höheren Umgebungstemperaturen durch Wind können durch einen Temperatursensor verhindert werden, indem die Auslösungen über einer bestimmten Temperaturgrenze ausgeblendet werden.

Ein Leck im Wasserversorgungssystem, kann durch einen Druckschalter und einem Magnetventil oder einem mechanischen Druckwächter (Wasserstopp, Schlauchplatz-Sicherung) überwacht werden.

Damit Personen die in den Schutzbereich von Bewegungsmelder und Lichtschranken betreten, nicht mit Wasser angespritzt werden, kann der Zugang mit einer Lichtschranke die in Hüfthöhe montiert ist(Hilfslichtschranke) überwacht werden.

Das verspritzten von Wasser bei Regen, kann durch einen Regensensor ausgeschlossen werden, indem der Wasserspritzer bei Regen ausgeschaltet bleibt.

Die dem Programm zugrundeliegenden Zeiten, Anzahlen von Auslösungen, Pausen und Zyklen usw. sind Variablen, und können je nach Bedarf(Lage, Größe und Art des zu schützenden Objektes) verändert werden. Das Programm kann auf einem Mikroprozessor, einem Rechner oder einer Relaissteuerung, etc. laufen.

Die Tierabwehr kann relativ kostengünstig realisiert werden, wenn z.B. eine bereits vorhandene Gartenbewässerungsanlage mitbenützt werden kann.

### Bester Weg zur Ausführung der Erfindung

Für den Aufbau werden benötigt:
1. Hochtonlautsprecher(Ultraschallgenerator)
2. Bewegungsmelder
3. Lichtschranke
4. Sektorenregner(für direkten Wasserstrahl)
5. Magnetventil
6. Druckschalter oder mechanischen Druckwächter.
7. Mikroprozessor mit einem Programm wie unter Punkt 0004-0018 beschrieben.

Der Sektorenregner wird an eine Wasserversorgung angeschlossen und mittels eines Ventils das vom Mikroprozessor gesteuert wird geschalten. Der Hochtonlautsprecher wird über ein Relais vom Mikroprozessor geschaltet.

Bei Außentemperaturen um den Gefrierpunkt, wird die Tierabwehr nur mit dem akustischen Signal betrieben.

Die Bewegungsmelder und Lichtschranken müssen so positioniert werden, dass die Auslösung möglichst nur durch die Tiere passiert die abgeschreckt werden sollen. Wenn der Bereich vor Katzen geschützt werden soll, so ist die Lichtschranke ungefähr auf Schulterhöhe der Katze eingestellt. Hunde können dadurch ebenfalls erfasst werden. Wenn der Bereich vor Vögel geschützt werden soll, so ist vorzugsweise ein Bewegungsmelder einzusetzen, der eventuell höher anzuordnen ist als bei Katzen oder Hunden. Das Eindringen von Vögeln kann durch eine Lichtschranke nur begrenzt erfasst werden.

## Patentansprüche

1. Einheit zur Abschreckung von Tieren **dadurch gekennzeichnet dass** die Abschreckung akustisch und mit Wasser erfolgt.

2. Programm gemäß Anspruch 1 zur Verarbeitung von Eingangsignalen. Die Eingangsignale werden von einem oder mehreren Bewegungsmelder und oder einer oder mehreren Lichtschranken, einer Hilfslichtschranke, einem Temperatursensor und einem Druckschalter eingelesen.

3. Programm gemäß Anspruch 1 zur Generierung von Ausgangssignale. Mit einem Ausgangssignal wird ein Hochtonlautsprecher und mit dem anderen Ausgangssignal ein Wasserspritzer aktiviert, sofern nicht die Hilfslichtschranke betätigt wurde. Die Hilfslichtschranke detektiert ob Personen den zu schützenden Bereich betreten.

4. Programm gemäß Punkt 3, das je nachdem wie häufig und in welchem Abstand der Bewegungsmelder und oder die Lichtschranke gemäß Punkt 2 betätigt wurden, Ausgangssignale generiert, die den nachfolgend beschriebenen Zyklen und Pausen folgen.

5. Zyklen gemäß Punkt 4 die aus Betätigungshäufigkeit und Abständen zwischen den Betätigungen generiert werden, und die die Länge der Ausgangssignale bestimmen. D.h. bei der 1. Betätigung des Bewegungsmelders oder der Lichtschranke werden das akustische Signal und der Wasserstrahl für z.B. 10 Sekunden aktiviert, bei der 2. Betätigung für ca. 7 Sekunden, usw. Nach z.B. 7 Betätigungen ist der 1. Zyklus zu Ende und die Zählung der Betätigungen beginnt wieder von vorne. Wenn nicht innerhalb von z.B. ca. 10 Minuten die z.B. 6. Betätigung erfolgt, wird der Zyklus zurückgesetzt, und die Zählung der Betätigungen beginnt wieder von vorne.

6. Pausen zwischen den Zyklen gemäß Punkt 4, während denen die Ausgangssignale nicht aktiviert werden. D.h. nach dem 1. Zyklus gibt es eine Pause von ca. 10-15 Minuten, in der kein akustisches Signal und kein Wasserstrahl aktiviert werden. Nach dem 2. Zyklus gibt es eine Pause von ca. 30 Minuten, usw. Nach z.B. dem 4. Zyklus ist die Pause ca. 4 Stunden. Ebenfalls nach z.B. dem 4. Zyklus beginnt die Zykluszählung wieder von vorne.

7. Ausgangssignal gemäß Punkt 3 das folgendermaßen **gekennzeichnet** ist: Es werden in folgender Reihenfolge 1. ein Tonimpuls 2. ein Dauerton und 3. bei anhaltendem Dauerton ein Wasserstrahl aktiviert.

8. Programm gemäß Anspruch 1 dass Fehlauslösungen des Bewegungsmelders oder des Lichtschranken durch Wind, oder des Bewegungsmelders durch Wind und hoher Umgebungstemperatur mit Hilfe eines Temperatursensors gemäß Punkt 2 zu einem Großteil ausschließen kann, indem aus den Auslösungen die über einer bestimmten Temperaturgrenze liegen kein Ausgangsignal generiert wird.

9. Einheit laut Anspruch 1 **dadurch gekennzeichnet dass** diese mit einer Gartenbewässerungsanlage kombiniert werden kann, indem in die Zuleitung ein Ventil installiert wird, dass vom Ausgangssignal für Wasserspritzer gemäß Punkt 3 gesteuert wird.

10. Programm gemäß Anspruch 1 zur Überwachung von Lecks im Wasserversorgungssystem mittels Druckschalter gemäß Punkt 2. Wenn der Druck in der Leitung zum Wasserspritzer abfällt ohne dass der Wasserspritzer aktiviert wurde bleibt das Ventil geschlossen.
